# EUROPEAN PATENT APPLICATION

(11) **EP 1 592 184 A2**
(43) Date of publication of application: **02.11.2005**
(21) Application number: 05002427.2
(22) Date of filing: 04.02.2005
(51) Int. Cl.: H04L 12/56, H04L 12/28

(54) **Method and system for transmitting data for data synchronization between server and client when data synchronization session was abnormally terminated**

(30) Priority: 06.04.2004 KR 2004023348
(71) Applicant: SAMSUNG ELECTRONICS CO., LTD., Suwon-si, Gyeonggi-do (KR)
(72) Inventor: Yang, Eun-Hee, c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a method for transmitting data for data synchronization between a server and a client. If a data synchronization session in a network is abnormally terminated, the client stores state information of data to be transmitted, which indicates states of the data at the time of the abnormal termination. The state information of the data makes it possible to resume the data transmission beginning with data items that were being transmitted at the time of the abnormal termination. Since one of the server and the client transmits only data that has not been received by the other, it is possible to decrease the time necessary to complete the data synchronization and also to reduce a wasteful, unnecessary transaction when synchronization of a large amount of data is performed.

## Description

The present invention relates to a method for synchronizing data between a server and a client, and more particularly to a method for synchronizing data between a server and a client, wherein if the data transmission to be synchronized between the server and the client was abnormally terminated due to internal or external factors, the data transmission can be resumed beginning with a data item that was being transmitted at the time of the abnormal termination.

Users of mobile terminals generally store and use various kinds of personal information such as address books and schedules in their mobile terminals. Such information is stored in a mobile terminal and is also stored and managed in a separate data storage server to allow the terminal's user to store and use the same information in a new mobile terminal at a later time when the user uses the new mobile terminal due to the loss or replacement of the former terminal. To keep the information stored in the mobile terminal synchronized with data stored in the data storage server, data synchronization between the terminal and the server must be performed when there is a change in the data stored on the server or in the terminal.

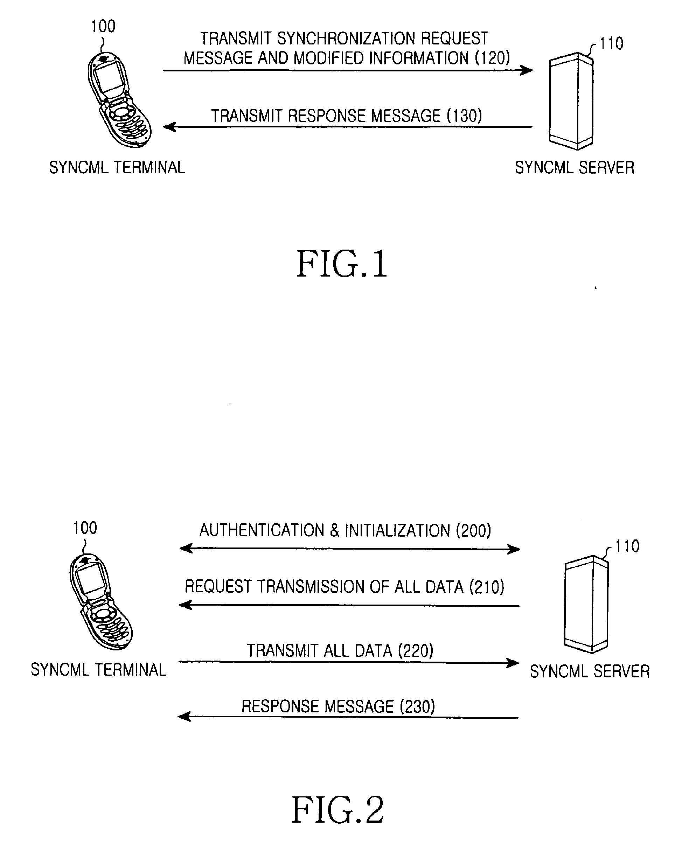

The data synchronization between the mobile terminal and the data storage server is typically initiated at the request of the terminal's user. A description will be given of how the data synchronization is performed between the mobile terminal and the data storage server with reference to Fig. 1. Fig. 1 is a process flow diagram showing a conventional method for synchronizing data between a server 110 and a client 100. In Fig. 1, the server 110 is a SyncML (Synchronization Mark-up Language) server storing the data as described above, and the client 100 is a mobile terminal serving as a SyncML client.

Conventional data synchronization is performed in the following manner, as shown in Fig. 1. First, the client 100 requests synchronization from the server 110, thereby initiating a synchronization session. In response to the request, the server 110 carries out an authentication process to determine if the client 100 is permitted to access the server 110. If the authentication is completed, the client 100 sends to the server 110 at step 120 a SyncML message (i. e. client-modified data), which includes synchronization target data in the client 100 to be synchronized (i.e. information modified after previous synchronization). Information of the total number of data items to be transmitted is also included in and carried by the SyncML message.

After receiving the SyncML message, the server 110 analyzes the data to be determined which modifications were made to the data in the client 100 and need to be updated in the data in the server 110, and performs data synchronization to synchronize the data therebetween. For example, the server 110 performs a modification, an update or a deletion of the data as required for the data synchronization. After the data synchronization, the server 110 returns to the client 100 at step 130 a SyncML response message (i.e. server-modified data), which includes information related to the data modified in the server. The number of data items of the modified data in the server, together with the modified data, is also transmitted to the client 100. As needed, the client 100 transmits a Map operation to the server 110, in order to map a server ID to a client ID. If the server 110 receives the Map operation, it transmits the processed result thereof to the client 100.

Although the normal operation of steps 120 and 130 for data synchronization has been described above, the synchronization session may be abnormally terminated due to traffic in a wireless network or other external factors. A conventional method for data synchronization after a synchronization session was abnormally terminated will now be described with reference to Fig. 2. Fig. 2 is a process flow diagram showing a conventional method for data synchronization when a synchronization session between a server and a client was abnormally terminated.

First, in response to a synchronization request from a client 100, at step 200, a server 110 performs an authentication process to determine if the client 100 is permitted to access the server 110. Then, at step 210, the server 110 requests that the client 100 transmit to the server 110 all of the data stored in the client 100 even though the previous synchronization session was abnormally terminated.

In response to this request, at step 220, the client 100 transmits to the server 110 the data (all data or modified data). The data to be transmitted to the server 110 includes data that has been transmitted, data that has not been transmitted and data that has already been synchronized. In response to the client-modified data received from the client 100, at step 230, the server 110 returns to the client 100 the processed result of the received client-modified data and server-modified data, which includes information of data modified in the server 100.

The conventional synchronization method, in which all of the data stored in the client 100 is transmitted to the server 110 for synchronization between the client 100 and the server 110, is commonly referred to as a "slow sync". The slow sync is performed due to various causes such as the loss of a change log in the server 110 or the client 100 or overload on the network. Specifically, the slow sync is performed in the following manner. When the client 100 transmits all of its data to the server 110, the server 110 compares its data with the data received from the client 100 on a field-by-field basis, and transmits information of data modification in the server 110 back to the client 100. Based on the information received from the server 110, the client 100 synchronizes the data with the server 110.

In the conventional synchronization method, if a synchronization session was abnormally terminated during a data synchronization process between the server 110 and the client 100, the slow sync must be completely performed again by exchanging the entirety of the data therebetween, as described above.

The slow sync has a low processing speed because of the need to retransmit the entirety of the data when a synchronization session was abnormally terminated. Further, if the slow sync frequently occurs, it causes synchronization delay between the server and the client.

Even if a synchronization session for transmitting only the modified data, as well as the entirety of the data, was abnormally terminated due to external factors such as overload on the network, it is necessary that the entirety of the data, including data which has already been synchronized between the client and the server in the previous synchronization process, to be retransmitted in a further synchronization process afterwards. This lengthens the time of synchronization between the server and the client and also requires unnecessary transactions, causing additional overload on the network.

Therefore, the present invention has been made in view of at least the above problems.

It is the object of the present invention to provide a method for synchronization between a server and a client, wherein if a synchronization session is abnormally terminated, only data that has not been synchronized between the server and the client is transmitted in a further synchronization process.

This object is solved by the subject matter of the independent claims.

Preferred embodiments are defined by the subject matter of the dependent claims.

In accordance with one aspect of the present invention, the above can be accomplished by the provision of a method for resuming data synchronization between a server and a client when the data synchronization is abnormally terminated, the method includes the steps of if the data synchronization is abnormally terminated while the client is transmitting data to the server, terminating a data synchronization session by the client after storing, in the client, state information of the data indicating a state thereof at a time when the data synchronization is abnormally terminated; notifying the server, by the client, of a resumed synchronization session when the client attempts to reperform the data synchronization after the data synchronization session was terminated; resuming the transmission of data from the client, beginning with a data item that was being transmitted to the server at the time of the abnormal termination, by using the state information of the data; and updating data previously stored in the server using the data received from the client.

In accordance with another aspect of the present invention, there is provided a system for resuming data synchronization between a server and a client when the data synchronization is abnormally terminated, the system including a client for terminating a data synchronization session after storing state information of the data if the data synchronization is abnormally terminated, said state information of the data indicating a state thereof at a time when the data synchronization is abnormally terminated, and notifying the server of a resumed synchronization session when the client attempts to reperform the data synchronization after said data synchronization session is terminated; and the server transmitting and receiving information related to synchronized data to and from the client when the client attempts to reperform the data synchronization, wherein the client determines data to be transmitted based on the state information of the data, and resumes transmitting the data to the server, beginning with a data item that was being transmitted at the time of the abnormal termination.

The above object and other aspects, features and other advantages of the present invention will be more clearly understood from the following detailed description taken in conjunction with the accompanying drawings, in which:
Fig. 1 is a process flow diagram showing a conventional method for synchronizing data between a server and a client;
Fig. 2 is a process flow diagram showing a conventional method for data synchronization when a synchronization session between a server and a client was abnormally terminated;
Fig. 3 is a signal flow diagram showing a method for resuming reception of data for synchronization between a client and a server when previous data transmission for synchronization was aborted, according to an embodiment of the present invention;
Fig. 4A is a signal flow diagram showing an example of the abnormal termination of data transmission from the client to the server according to one embodiment of the present invention;
Fig. 4B is a signal flow diagram showing the procedure for resuming data reception in the example of Fig. 4A;
Fig. 5A is a signal flow diagram showing an example of the abnormal termination of response message transmission from the server to the client in response to data transmission from the client according to another embodiment of the present invention; and
Fig. 5B is a signal flow diagram showing the procedure for resuming data reception in the example of Fig. 5A.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention.

The present invention provides a method and system in a wireless network for synchronizing data between a server and a client when a synchronization session is abnormally terminated during a synchronization process of user information. A preferred embodiment of the present invention uses SyncML as a standard protocol for synchronization. In the present invention, after the synchronization session is abnormally terminated, the synchronization process is resumed from the point when the abnormal termination occurred rather than having to restart the process from the beginning. In other words, according to the present invention, after the transmission of data during synchronization between the server and the client is abnormally terminated, the synchronization is performed by resuming transmission of only the remaining data items of the data, rather than data items that have already been synchronized therebetween.

Although not shown, a system for providing a user data synchronization service according to an embodiment of the present invention includes a SyncML server and a client, such as a cellular phone or a PDA, which connects to the server using a network interface via a wireless connection. According to another embodiment of the present invention, the system includes a SyncML server and a client, such as a personal computer (PC) or a handheld PC, which connects to the server using a network interface via a wired connection. That is, the client is allowed to access the syncML server ("server") by wires or wirelessly.

The server provides both information to be shared with the client and a synchronization service to the client. Some examples of the information to be shared with the client include various kinds of information that can be modified in the client, such as files, notes, email, vcalendar and vCard. The synchronization is performed by reflecting in the server any modifications and/or deletions of the provided information, as made by the client user,.

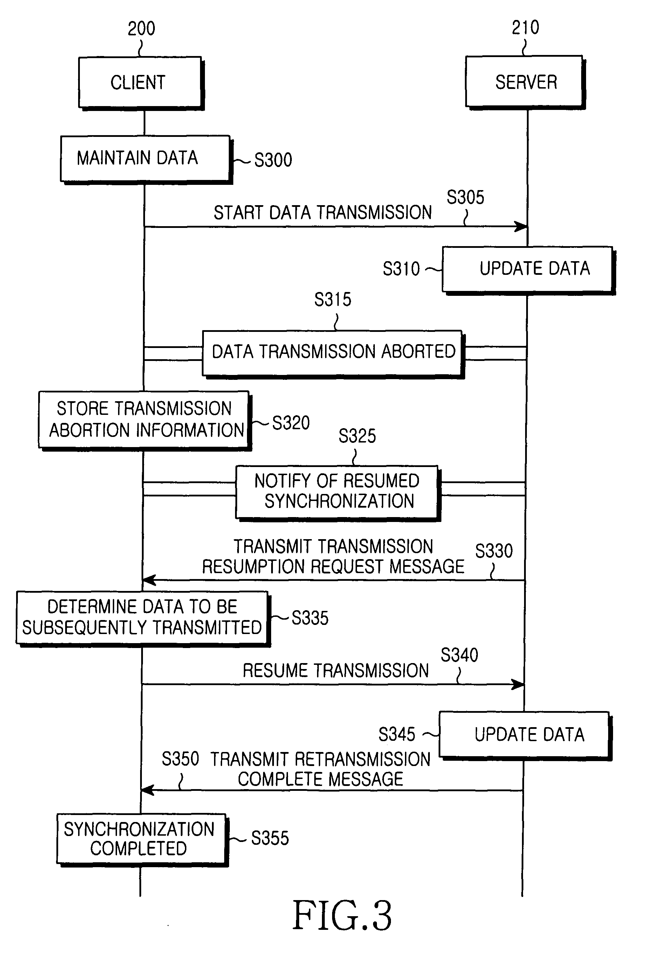

A method for transmitting data for data synchronization between a client and a server according to an embodiment of the present invention will now be described with reference to Fig. 3. Fig. 3 is a signal flow diagram showing a method for resuming synchronization of data between a client and a server when previous data transmission for synchronization was aborted, according to an embodiment of the present invention.

A description will first be given of how information generated and modified by a user through a client 200 is transmitted to a server 210 for data synchronization between them. First, at step S300, the client 200 maintains data to be shared with the server 210, which is generated and modified by a user, and starts transmitting the data to the server 210 at step S305. To initiate the data transmission, an authentication process must first be performed between the client 200 and the server 210.

In detail, if newly generated/modified data is input to the client 200 and the client 200 requests data synchronization from the server 210, the server 210 updates/registers the shared data at step S310 in response to the synchronization request. When the newly generated/modified information is input to the client 200, the client 200 converts the modified data to synchronization data that has a predetermined format identifiable by both the client 200 and the server 210.

The client 200 then transmits the synchronization data containing the modified data to the server 210, and the server 210 reads the synchronization data received from the client 200 based on the predetermined format to extract the modified data from the synchronization data. The server 210 updates previously stored data with the extracted data, for example, by storing the extracted data in addition to the previously stored data, and then stores the updated data.

If the user inputs information to be shared with the server 210 to the client 200 and inputs an instruction requesting synchronization of the client 200 with the server 210, the client 200 carries out synchronization with the server 210 using the SyncML protocol. In other words, if a SyncML session is started as the client requests synchronization from the server 210, the client 200 performs synchronization with the server 210. When the number of synchronized data items is identical to a total data item number that the server 210 has received from the client 200 together with the synchronization request from the client 200, the synchronization is completed.

If ongoing data transmission for synchronization is aborted due to an internal or external environmental factor (for example, cut or crossed lines of a network or a system failure) as described above at step S315, the server 210 stores in its internal storage space any of the data items it has received up to the point when the transmission abortion occurred, and the information regarding the received data items. In the case where the server 210 has not received all of the data items to be received, the information regarding the received data items includes the number of data items synchronized up to the point when the transmission abortion occurred and the number of data items to be further received, which will be used during a reconnection for synchronization. The client 200 then terminates the synchronization session after storing the information indicating that the data transmission has been abnormally terminated at step S320.

Thereafter, if the client 200 receives an instruction requesting synchronization with the server 210 after reconnecting to the server 210, the client 200 performs synchronization with the server 210. To perform the synchronization with the server 210, the client 200 requests synchronization from the server 210 by transmitting to the server 210 at step S325synchronization data, containing a message indicating resumed synchronization. The server 210 reads the synchronization data received from the client 200 and transmits to the client 200 at step 330 a message requesting the resumption of the data transmission, in response to the synchronization request. In response to the transmission resumption request message received from the server 210, the client at step S335 200 reads location information of the data to be transmitted from the transmission resumption request message, and determines which data items are to be transmitted excluding the data items already transmitted in the previous synchronization session.

If the client 200 determines that the data to be continually transmitted, the client 200 resumes transmission of the synchronization data at step S340. Then, the server 210 reads the synchronization data received from the client 200 to extract modified data from the synchronization data at step S345. The server 210 then updates previously stored data with the extracted data, for example, by storing the extracted data in addition to the previously stored data, and then stores the updated data.

A description will now be given of how data reception is resumed when data synchronization between a server and a client was abnormally terminated, according to an embodiment of the present invention.

The embodiments of the present invention will be described with reference to two types of abnormal termination of data synchronization. One type is abnormal termination of data synchronization when a client is transmitting data to the server, and the other is abnormal termination when the server is transmitting a response message to the client in response to the data received from the client.

According to an embodiment of the present invention, some variables are previously determined for use in resuming data transmission that was abnormally terminated. For example, to request synchronization from the server, the client transmits a synchronization request to the server after adding specific information related to the data to be shared with the server to the synchronization request. The specific information transmitted within the synchronization request to the server includes, for example, the total number of data items to be transmitted. Thereafter, the client transmits the data to be shared with the server, including state information thereof, to the server. The state information of the data, which is transmitted after the data transmission was abnormally terminated, includes information related to the amount of data items that have already been transmitted and information of a data item, beginning with which the data transmission is to be resumed.

The state information of the data not only includes the size of data to be transmitted but also ordinal numbers sequentially assigned to predetermined-bit data items into which the data is divided. This allows the client to resume data transmission, beginning with a data item next to a data item completely transmitted to the server, after the abnormal termination, and also allows the server to know the ordinal number of the next data item to be received. This state information makes it possible to monitor the transmission states of the data.

Some variables are previously defined to monitor the transmission states of the data and resume the transmission of the data if the data transmission for synchronization is abnormally terminated, according to an embodiment of the present invention. Specifically, a sync log (syngLog), a continue log (continueLog) and a change log (changeLog) are defined to assist in the resumption of the transmission of the data.

The sync log is defined in each of the client and the server to store the number of data items completely synchronized between the client and the server. The sync log of the client is cleared if the change log of the client is cleared or if the number of data items in the change log of the client is equal to the number of data items of server-modified data. On the other hand, the sync log of the server is reset if the change log of the server is cleared or if the number of data items in the change log of the server is equal to the number of data items of client-modified data.

The continue log of one of the client and the server stores the ordinal numbers of data items, which have been transmitted to the other, and a response message to which the one has not received from the other. The continue log is provided in each of the client and the server. The continue log in one of the client and the server is cleared after a response message is received from the other.

The change log is a module defined according to a SyncML protocol, which stores server-modified data and client-modified data. A data item is removed from the change log if a response message to the transmission of the data item is received.

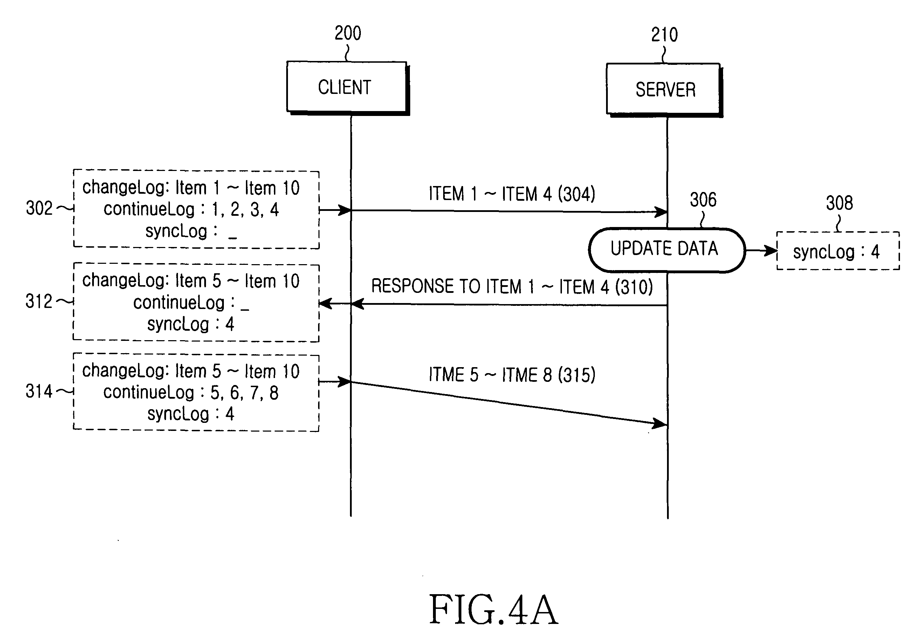

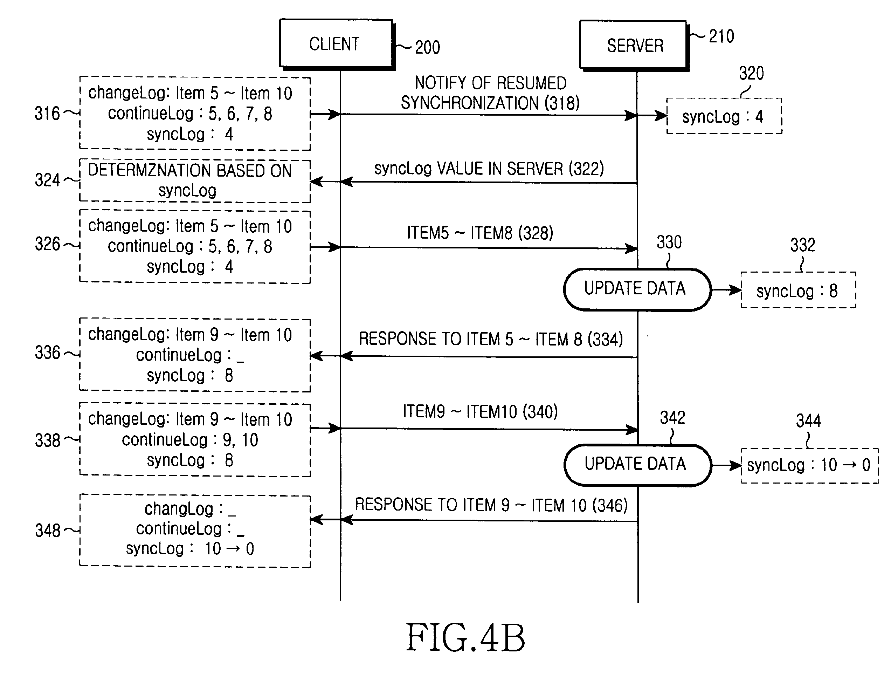

A data transmission method using the above variables for data synchronization between a client and a server when the data transmission is abnormally terminated, according to one embodiment of the present invention, will now be described with reference to Figs. 4A and 4B. Fig. 4A is a signal flow diagram showing an example of the abnormal termination of data transmission from the client to the server according to the embodiment of the present invention. Fig. 4B is a signal flow diagram showing the procedure for resuming data reception in the example of Fig. 4A.

Fig. 4A is an example where a client 200 transmits to a server 210 client-modified data (for example, 10 data items), input by the user, but the transmission of the client-modified data is abnormally terminated. The ten client data items are herein referred to as Item 1 to Item 10 for convenience of explanation. To sequentially transmit the client-modified data items, they include information identifying their ordinal numbers (1 to 10 in this example). Here, the 10 data items are divided into three parts (for example, into 4, 4 and 2 data items) to be transmitted because it is difficult to transmit the 10 items all at once due to limited transmission capacity.

First, if the client 200 sends a synchronization request to the server 210, the server 210 performs an authentication process of the client 200 to determine if the client 200 is permitted to access the server 210. If the authentication is completed, the client 200 transmits to the server 210 data (i.e. client-modified data) to be shared with the server 210, which is generated and modified by the user. The client 200 transmits to the server 210 at step 300 information identifying the total number of data items to be transmitted, together with the client-modified data.

For example, at step 304, the client 200 transmits to the server 210 the first four data items (Item 1 to Item 4), of the entire client-modified data items (Item 1 to Item 10) to be transmitted, as shown in Fig. 4A. Here, a change log of the client 200 still indicates 10 data items (Item 1 to Item 10) as denoted by reference numeral "302" in Fig. 4A since the client 200 has not yet received a response to the data transmission from the server 210. A continue log of the client 200 indicates ordinal numbers 1, 2, 3 and 4 of the first four data items (Item 1 to Item 4) which the client 200 has transmitted to the server 210, and a response to which the client 200 has not yet received from the server 210. A sync log in the client 200 has a value of 0 since no data item has been synchronized.

The server 210 receives the four data items (Item 1 to Item 4) transmitted from the client 200, and updates previously stored data with the received data items at step 306, thereby synchronizing the four data items between the client 200 and the server 210. At this time, the value of a sync log in the server 210 is 4 since the number of the synchronized data items (Item 1 to Item 4) is 4 as denoted by reference numeral "308". The server 210 then transmits a response message to the received data items (Item 1 to Item 4) to the client 200 at step 310. As the client 200 receives the response message to the data items (Item 1 to Item 4), the data items (Item 1 to Item 4) are removed from the change log of the client 200, whereby data items (Item 5 to Item 10) remain in the change log. As the client 200 receives the response message to the data items (Item 1 to Item 4), the ordinal numbers (1 to 4) of the data items (Item 1 to Item 4) are also cleared from the continue log of the client 200. In addition, the value of the sync log of the client 200 is 4 since the synchronization of the data items (Item 1 to Item 4) is completed.

The client 200 then transmits the next data items (Item 5 to Item 8) at step 315. During this transmission, an abnormal event may occur due to internal or external factors before the server 210 completely receives the data items (Item 5 to Item 8). If the abnormal event occurs, the client 200 terminates the synchronization session after storing information indicating that the synchronization session has been abnormally terminated. As denoted by reference numeral "314", the data items (Item 5 to Item 10) are still stored in the change log of the client 200, the ordinal numbers (5 to 8) of the data items (Item 5 to Item 8) transmitted to the server 210 are stored in the continue log, and the value of the sync log is still 4 since the number of the synchronized data items (Item 1 to Item 4) is 4.

Next, a data transmission procedure for resuming the transmission of data for data synchronization according to an embodiment of the present invention is described with reference to Fig. 4B.

When the client 200 again attempts to perform data synchronization after the data synchronization was abnormally terminated, the client 200 notifies the server 210 of a resumed synchronization session at step 318. Here, the client 200 sends to the server 210 the value of the sync log stored therein, together with the notification. The client 200 has the same log values denoted by "316" as the log values denoted by "314" in Fig. 4A. The server 210 also has the same sync log value denoted by "320" as the sync log value denoted by "308" in Fig. 4A. The server 210 then transmits its sync log value to the client 200.

The client 200 then compares its sync log value with the sync log value received from the server 210 to make a determination based on the sync log values at step 324. Since the compared result is that the two sync log values are both equal to 4, the client 200 recognizes that the server 210 has received only the four data items (Item 1 to Item 4). Accordingly, at step 328, the client 200 transmits the data items (Item 5 to Item 8) that were being transmitted to the server 210 at the time of the abnormal termination. Then, as denoted by reference numeral "326", the remaining data items (Item 5 to Item 10), other than the data items transmitted and synchronized before the abnormal termination, are still stored in the change log of the client 200, the ordinal numbers (5 to 8) of the data items (Item 5 to Item 8) transmitted to the server 210 are stored in the continue log, and the value of the sync log is still 4 since the number of the synchronized data items (Item 1 to Item 4) is 4.

Upon receipt of the four data items (Item 5 to Item 8) transmitted from the client 200, the server 210 updates previously stored data with the received data items (for example by storing the received data items in addition to the previously stored data items) at step 330, thereby synchronizing the four data items (Item 5 to Item 8) between the client 200 and the server 210. At this time, the value of the sync log of the server 210 is 8 since the number of the synchronized data items (Item 1 to Item 8) is 8 as denoted by reference numeral "332". The server 210 then transmits a response message to the received data items (Item 5 to Item 8) to the client 200 at step 334. As the client 200 receives the response message to the transmission of the data items (Item 5 to Item 8), the data items (Item 5 to Item 8) are removed from the change log of the client 200, and the ordinal numbers (5 to 8) thereof are removed from the continue log of the client 200. Accordingly, the change log of the client 200 has two data items (Item 9 and Item 10), the continue log is cleared, and the sync log value is 8 as denoted by reference numeral "336".

The client 200 then extracts the next data items (Item 9 and Item 10) to be transmitted and transmits the extracted data items to the server 210 at step 340. Upon receipt of the data items (Item 9 and Item 10), the server 210 updates previously stored data with the received data items (for example by subsequently storing the received data items in addition to the previously stored data items) at step 342, thereby synchronizing the data items (Item 9 and Item 10) between the client 200 and the server 210. At this time, the sync log value of the server 210 is 10 since the number of the synchronized data items (Item 1 to Item 10) is 10. Here, the server 210 compares the sync log value with a total data item number of the client-modified data, which was previously received from the client 200, and resets the sync log value if they are identical. The server 210 then transmits a response message to the received data items (Item 9 and Item 10) to the client 200 at step 346.

As the client 200 receives the response message to the transmission of the data items (Item 9 to Item 10), the data items (Item 9 to Item 10) are removed from the change log of the client 200, and the ordinal numbers (9 to 10) thereof are removed from the continue log of the client 200. Accordingly, as denoted by reference numeral "348", the change log and the continue log of the client 200 are all cleared, and the sync log value is 10 since the number of the synchronized data items (Item 1 to Item 10) is 10. Thereafter, the sync log of the client 200 is reset since the change log thereof is cleared.

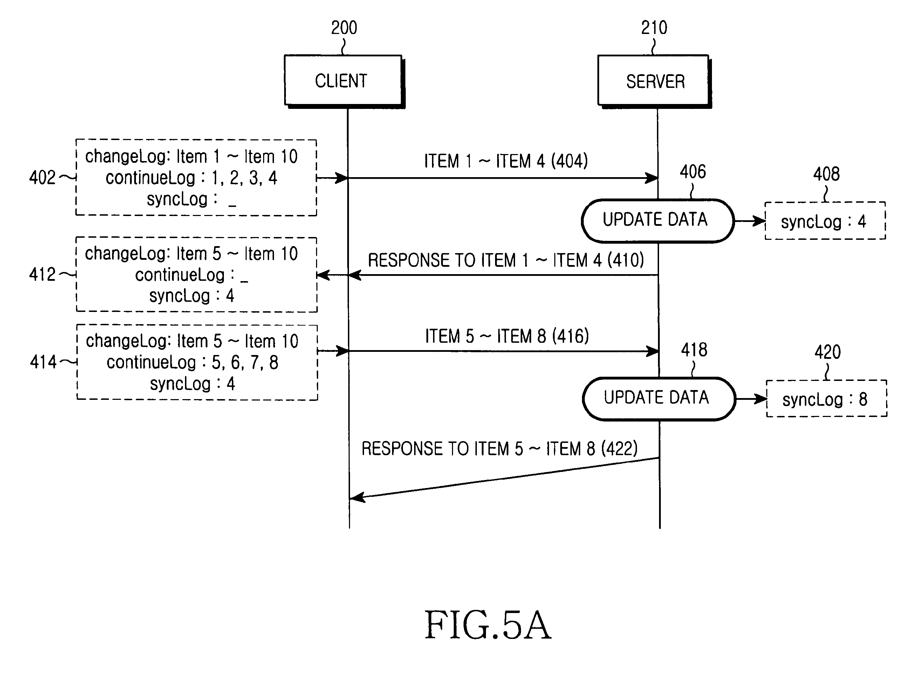

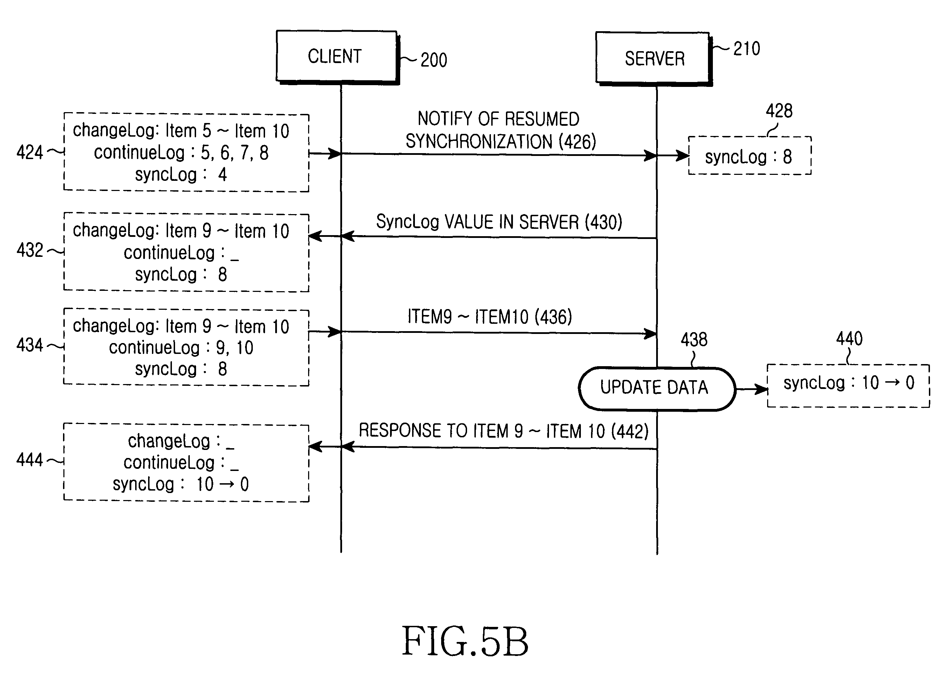

A data transmission method for data synchronization between a client and a server when transmission of a response message from the server to the client in response to received data is abnormally terminated, according to another embodiment of the present invention, will now be described with reference to Figs. 5A and 5B. Fig. 5A is a signal flow diagram showing an example of the abnormal termination of response message transmission from the server to the client in response to data transmission from the client according to the embodiment of the present invention. Fig. 5B is a signal flow diagram showing the procedure for resuming data reception in the example of Fig. 5A.

Fig. 5A is an example where after a client 200 transmits client-modified data (for example, 10 data items), input by the user, to a server 210, a transmission of a response message from the server 210 to the client 200 in response to the transmission of the modified data is abnormally terminated. In this example, the same data items as in Fig. 4A are transmitted from the client 200 to the server 210.

First, during an authentication process, the client 200 sends to the server 210 information of the total number of data items to be transmitted, together with a synchronization request. After the authentication process is completed, the client 200 transmits data items Item 1 to Item 4 to the server 210 at step 404. Steps 402 to 414 of Fig. 5A are identical to steps 302 to 314 of Fig. 4A.

At step 416, the client 200 then transmits the next data items (Item 5 to Item 8) to the server 210. The server 210 receives the data items (Item 5 to Item 8) transmitted from the client 200, and updates previously stored data with the received data items (for example by subsequently storing the received data items in addition to the previously stored data items) at step 418, thereby synchronizing the received data items between the client 200 and the server 210. Then, the value of a sync log of the server 210 is 8 since the number of the synchronized data items (Item 1 to Item 8) is 8 as denoted by reference numeral "420". The server 210 then transmits a response message to the data items (Item 5 to Item 8) at step 422. During this transmission, an abnormal event may occur due to internal or external factors before the client 200 completely receives the response message to the data items (Item 5 to Item 8). If the abnormal event occurs, the client 200 terminates the synchronization session after storing information indicating that the synchronization session has been abnormally terminated.

Next, a data transmission procedure for resuming transmission of data for data synchronization according to an embodiment of the present invention is described with reference to Fig. 5B.

When the client 200 again attempts to perform the data synchronization after the data synchronization was abnormally terminated, the client 200 notifies the server 210 of a resumed synchronization session at step 426. Here, the client 200 sends the value of its sync log, together with the notification, to the server 210. In response to this notification, the server 210 also transmits the value of a sync log stored in it to the client 200 at step 430. If the sync log values of the client 200 and the server 210 are different, the server 210 receives data items of the same ordinal numbers as in a continue log of the client 200, and then steps 432 to 444 of Fig. 5B are performed in the same manner as described above with reference to Fig. 4B. If the sync log of the client 200 has a non-zero value while the sync log of the server 210 is reset, it indicates that the server 210 has received and processed all the client-modified data items from the client 200.

When the transmission of the client-modified data is completed in this manner, transmission of server-modified data is performed in the manner as described above, and the server 210 transmits a Map operation as needed, for example, when data is added in the server 210.

As apparent from the above description, the present invention provides a method for transmitting data for synchronization between a server and a client, which has at least the following features and advantages. If a data synchronization session in a wireless network was abnormally terminated due to low bandwidth or significant influence from the external environment, the data transmission is resumed beginning with data items that were being transmitted at the time of the abnormal termination. This increases efficiency and ease of the data transmission between the server and the client. Since one of the server and the client transmits only data that has not been received by the other, it is possible to decrease the time necessary to complete the data synchronization and also to reduce a wasteful, unnecessary transaction when synchronization of a large amount of data is performed.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method for resuming data for data synchronization between a server and a client when the synchronization is abnormally terminated, the method comprising the steps of:
if the data synchronization is abnormally terminated while the client is transmitting data to the server, terminating a data synchronization session by the client after storing, in the client, state information of the data indicating a state thereof at a time when the data synchronization is abnormally terminated;
notifying the server, by the client, of a resumed synchronization session when the client attempts to reperform the data synchronization after the data synchronization session was terminated;
resuming the transmission of data from the client, beginning with a data item that was being transmitted to the server at the time of the abnormal termination, by using the state information of the data; and
updating data previously stored in the server using the data received from the client.

2. The method according to claim 1, further comprising the steps of:
if the data synchronization is abnormally terminated while the server transmits a response message to the client in response to data received from the client, terminating a data synchronization session by the client after storing, in the client, state information of the data indicating a state thereof at a time when the data synchronization is abnormally terminated;
when the client attempts to reperform the data synchronization after the data synchronization session was terminated, notifying the server, by the client, of a resumed synchronization session, transmitting information related to synchronized data from the client to the server, and transmitting information related to synchronization data from the server to the client;
determining, by the client, data to be transmitted based on information of a data item, a response message to which the client has not received, and also based on said information of the synchronized data received from the server, said information of the data item and said information of the synchronized data being included in the state information of the data; and
resuming transmission of the data to the server, beginning with a data item that was being transmitted at the time of the abnormal termination, based on said determination of the data to be transmitted.

3. The method according to claim 1, wherein the state information of the data includes a sync log, a continue log and a change log.

4. The method according to claim 3, wherein the sync log represents the number of data items synchronized between the client and the server, and the sync log is defined in both the client and the server.

5. The method according to claim 3, wherein the continue log in one of the client and the server represents information of the ordinal number of a data item, which has been transmitted to the other, and a response message to which the one has not received from the other.

6. The method according to claim 3, wherein the change log represents server-modified data and client-modified data.

7. The method according to claim 3, wherein the sync log in the client is reset if the change log in the client is cleared or if the number of data items in the change log in the client is equal to the number of data items included in server-modified data, whereas the sync log in the server is reset if the change log in the server is cleared or if the number of data items in the change log in the server is equal to the number of data items included in client-modified data,
wherein the ordinal number of a data item is removed from the continue log in one of the client and the server if the one receives a response message from the other in response to said data item transmitted to the other, and
wherein a data item is removed from the change log if a response message is received in response to transmission of said data item.

8. The method according to claim 7, further comprising the steps of:
transmitting information of the total number of data items to be transmitted, together with the client-modified data, from the client to the server when the client requests data synchronization;
calculating and storing the change log, continue log and sync log in the client when the client transmits part of the client-modified data to the server;
updating data stored in the server using the data received from the client, calculating and storing the sync log in the server, and transmitting a response message to the client in response to the data received from the client;
comparing, in the client, the sync log in the client with the sync log in the server based on an analysis of the response message received from the server, and determining data to be transmitted based on the comparison; and
transmitting the determined data from the client to the server.

9. The method according to claim 8, further comprising the steps of:
transmitting the sync log in the client to the server and transmitting the sync log in the server to the client when the client attempts to reperform the data synchronization after the data synchronization was abnormally terminated when the data was being transmitted; and
determining, by the client, data to be subsequently transmitted based on the sync log received from the server and based on the sync log, change log and continue log previously stored in the client, and transmitting the data from the client to the server, beginning with a data item that was being transmitted at the time of the abnormal termination.

10. A system for resuming data synchronization between a server and a client when the data synchronization is abnormally terminated, the system comprising:
a client for terminating a data synchronization session after storing state information of the data if the data synchronization is abnormally terminated, said state information of the data indicating a state thereof at a time when the data synchronization is abnormally terminated, and notifying the server of a resumed synchronization session when the client attempts to reperform the data synchronization after said data synchronization session is terminated; and
the server transmitting and receiving information related to synchronized data to and from the client when the client attempts to reperform the data synchronization,
wherein the client determines data to be transmitted based on the state information of the data, and resumes transmitting the data to the server, beginning with a data item that was being transmitted at the time of the abnormal termination.
